# EUROPÄISCHE PATENTSCHRIFT

(11) **EP 1 381 789 B1**
(45) Veröffentlichungstag und Bekanntmachung des Hinweises auf die Patenterteilung: **28.09.2005**
(21) Anmeldenummer: 02747263.8
(22) Anmeldetag: 06.04.2002
(51) Int. Cl.: F16D 49/00, H02K 7/102

(54) **ELEKTROMOTORISCHER STELLTRIEB**
ACTUATOR DRIVEN BY ELECTRIC MOTOR
MECANISME DE REGLAGE A MOTEUR ELECTRIQUE

(30) Priorität: 27.04.2001 DE 10120832
(43) Veröffentlichungstag der Anmeldung: 21.01.2004
(73) Patentinhaber: Elodrive GmbH Stellantriebstechnik, 32423 Minden (DE)
(72) Erfinder: SCHUNKE, Kurt, 32427 Minden (DE); BUCHHOLZ, Bernd, 32369 Rahden (DE); PALM, Dieter, 33824 Werther (DE); BRUNS, Gerhard, 30451 Hannover (DE)
(74) Vertreter: Specht, Peter
(86) Internationale Anmeldenummer: PCT/EP2002/003833
(87) Internationale Veröffentlichungsnummer: WO 2002/088560

(56) Entgegenhaltungen:
- DE-A- 4 240 688

## Beschreibung

Die Erfindung betrifft einen elektromotorischen Stelltrieb, insbesondere für schwenkbare Stellglieder, mit einem Antriebsmotor und mit einem mit einem Abtriebsglied ausgestatteteten Antriebszug sowie einer Arretiervorrichtung.
Ein derartiger Stelltrieb ist z.B. aus DE 42 40 688 bekannt.

Der in Frage kommende elektromotorische Stelltrieb wird bevorzugt in der Heizungs-, Klima- und Lüftungstechnik verwendet. Die Stellglieder sind bevorzugt Klappen, die in Öffnungs- und Schließstellungen gebracht werden können, wobei auch die normale Grundstellung eine Zwischenstellung sein kann. Dem elektromotorischen Stelltrieb ist eine Steuerung zugeordnet. Es gibt auch Einsatzfälle, wo sie nur im Falle einer Gefahr geöffnet oder geschlossen werden sollen. Derartige Fälle sind beispielsweise das Verstellen der Klappen im Brandfalle.

Bei den bisher bekannten elektromotorischen Stelltrieben werden Antriebsmotoren verwendet, bei denen der Rotor innerhalb des feststehenden Stators liegt. Auf den Abtriebszapfen wird dann beispielsweise ein Ritzel drehfest aufgekeilt. Der nachfolgende Antriebszug ist jedoch so ausgelegt, dass die Drehzahl des Abtriebsgliedes deutlich geringer ist als die des Abtriebszapfens des Antriebsmotors. Die Arretiervorrichtung ist notwendig, um unter anderem das Stellglied in wenigstens einer Endstellung zu positionieren. Nachteilig ist bei den vorbekannten Stelltrieben, dass die Arretiervorrichtung innerhalb des Antriebszuges liegt, und dass das Bremsmoment aufgrund der reduzierten Drehzahlen entsprechend hoch sein muß. Viele Ausführungen der Stelltriebe sind als sogenannte Federrückläufer ausgebildet, d.h. bei der motorischen Verstellung wird eine Federeinheit, beispielsweise eine Spiralfeder gespannt, so dass die Rückstellbewegung des Stellgliedes durch die Federkraft erfolgt. Ein weiterer Nachteil der vorbekannten Stelltriebe ist noch darin zu sehen, dass die Abmessungen relativ groß sind. Da die Stelltriebe für viele Anwendungsfälle eingesetzt werden, ergeben sich aufgrund der Abmessungen Schwierigkeiten bei der Montage, da die Einbauräume häufig äußerst eng sind, so dass manche Stelltriebe gar nicht eingesetzt werden können.

Der Erfindung liegt die Aufgabe zugrunde, einen elektromotorischen Stelltrieb der eingangs näher beschriebenen Art so zu gestalten, dass die Abmessungen gegenüber den bisher bekannten Stelltrieben verringert werden, dass die Einstellung der Grundstellung äußerst einfach, jedoch exakt durchführbar ist, und dass das von der Arretiervorrichtung aufzubringende Bremsmoment verringert wird.

Die gestellte Aufgabe wird gelöst, indem der Antriebsmotor mit einem äußeren Rotor ausgestattet ist, und dass dem Rotor ein spannbares Rückstellfederelement zugeordnet ist, dass die Arretiervorrichtung mit einem bei Stillstand des Rotors daran anliegendem Bremsglied ausgestattet ist, welches beim Spannen der Rückstellfeder den Rotor des Antriebsmotors im Stillstand hält, und dass zumindest das Bremsglied der Arretiervorrichtung beim Anlauf des Rotors in eine Freigabestellung bringbar ist, und dass zur Grundeinstellung des Stellgliedes der Stelltrieb mit einer Handverstellwelle ausgestattet ist.

Bei dem erfindungsgemäßen Stelltrieb wirkt nunmehr die Arretiervorrichtung auf den Rotor des Antriebsmotors, d.h. dort wo das jeweilige Drehmoment des gesamten Antriebszuges am geringsten ist, so dass das aufzubringende Bremsmoment minimiert wird. Dadurch werden außerdem noch die Abmessungen reduziert. Außerdem wird der Rotor beim Spannen der Rückstellfeder von Hand gehalten, so dass die Grundeinstellung des Stellgliedes einfach und exakt vorgenommen werden kann. In einfachster Weise läßt sich die Grundeinstellung des Stellgliedes vornehmen, wenn auf die Handverstellwelle wenigstens ein Rad des Antriebszuges gelagert ist, und die Rückstellfeder durch Drehung der Handverstellwelle im Stillstand des Rotors spannbar ist. Da die Handverstellwelle von außen zugänglich ist, wird sinngemäß die Handverstellwelle zum Antriebselement, so dass der nachfolgende Teil des Antriebszuges bewegt wird, so dass das mit dem Abtriebsglied des Antriebszuges antriebstechnisch gekoppelte Stellglied in die gewünschte Endstellung gebracht werden kann. Der Antriebszug muß deshalb so ausgelegt sein, dass der Rotor des Antriebsmotors und ggf. die nachfolgenden Räder bis hin zur Handverstellwelle im Stillstand verbleiben. Dazu ist gemäß einer bevorzugten Lösung vorgesehen, dass das Rad mittels eines Freilaufes auf der Handverstellwelle gelagert ist. Dadurch ist es möglich, dass beispielsweise bei stillstehendem Rotor das Abtriebsglied des Antriebszuges bzw. das Stellglied verstellt wird. Andererseits bewirkt der Freilauf, dass beim Rücklauf des Rotors, der in diesem Falle durch die vorgespannte Rückstellfeder angetrieben wird, der Rotor auslaufen kann, wenn das Abtriebsglied des Antriebszuges gegen den betreffenden Anschlag fährt. Es kommt dann nicht zu einem schlagartigen Stillstand, wodurch entsprechend hohe Kräfte aufgebracht werden müßten. Anstelle des Freilaufes könnte auch eine geeignete Überholkupplung verwendet werden. Die Handverstellwelle ist zweckmäßigerweise in einer Buchse derart reibschlüssig gelagert, dass beim Verdrehen der Handverstellwelle eine Mitnahme der Buchse erfolgt, wobei der Drehwinkel der Buchse in beiden Drehrichtungen durch Anschläge begrenzt ist. Auf der Buchse ist ein Hebel gelagert, an dem eine Zugfeder angelenkt ist, die mit dem anderen Ende an der Buchse angelenkt ist. Dadurch erfolgt über die Zugfeder eine Drehbewegung des Hebels in der gleichen Drehrichtung wie die Handverstellwelle. Der Hebel ist Teil der Arretiervorrichtung, so dass der Bremshebel Kontakt mit dem Rotor des Motors erhält. Der Drehwinkel der reibschlüssig mitgenommenen Buchse ist größer als der Drehwinkel des Hebels, so dass durch die Differenz der beiden Drehwinkel über die Zugfeder der Bremshebel eine Anpresskraft auf den Rotor des Antriebsmotors überträgt.

Zweckmäßigerweise besteht der Bremshebel der Arretiereinrichtung aus zwei im Winkel zueinander stehenden Schenkeln, wobei der von den beiden Schenkeln eingeschlossene Winkel vorzugsweise ein spitzer Winkel ist. Dadurch wird der Bremshebel in sich elastisch, so dass ein sanftes bzw. weiches Aufsetzen auf den Rotor des Antriebsmotors gewährleistet ist, wenn der Hebel geschwenkt wird, wodurch der Bremshebel in Kontakt mit dem Rotor kommt. Außerdem ist beim Rücklauf durch Entspannen des Federelementes gewährleistet, dass der Rotor beim Anlaufen freigegeben wird. Diese Elastizität wird noch konstruktionsbedingt erhöht, wenn die beiden Schenkel durch ein Federelement vorzugsweise durch ein ringartiges Federelement miteinander verbunden sind. Im nicht gebremsten Zustand schlägt der Bremshebel zweckmäßigerweise gegen einen ortsfesten Anschlag. Damit die Kontaktfläche des Bremshebels in einem ausreichend großen Abstand zur Umfangsfläche des Rotors steht, ist vorgesehen, dass die Schwenkbewegung in Richtung zum Anschlag durch ein Federelement unterstützt ist. Dieses Federelement könnte ein Federstab sein, der beim Verschwenken des Bremshebels in Richtung zum Rotor vorgespannt wird, so dass durch die Rückstellkräfte der Bremshebel in die Freigabestellung geschwenkt wird. Anstelle eines Federstabes könnte jedoch auch eine Zugfeder verwendet werden, die mit einem Ende am Hebel oder am Bremshebel und mit dem anderen Ende an einem festen Bauteil eingehängt ist. In der Antriebsverbindung zwischen der Handverstellwelle und dem Rotor des Antriebsmotors ist zweckmäßigerweise ein Koppelelement montiert, welches so ausgelegt ist, dass der Rotor ungebremst auslaufen kann, wenn er durch Entspannen des Federelementes gedreht wird, und der Hebelmechanismus gegen einen Anschlag fährt und somit zum Stillstand kommt. Dieses Koppelelement ist zweckmäßigerweise scheibenförmig ausgebildet und mit dem Rad verbunden, welches dem Antriebsmotor zugeordnet ist.

Das Lösen der Arretiervorrichtung von Hand kann in bestimmten Fällen erforderlich sein. Es ist deshalb vorgesehen, dass die Handverstellwelle mit einem Federelement, vorzugsweise einer Schlingfeder derart ausgestattet ist, dass bei Drehung entgegen der Drehrichtung zur Spannen der Rückstellfeder die Arretiervorrichtung gelöst wird. Die Verwendung einer Schlingfeder hat den Vorteil, dass in einer Richtung sie nicht hemmend wirkt, während sie in der anderen Richtung sinngemäß wie ein Mitnehmer wirkt. Zweckmäßigerweise ist das Federelement in einem Spalt zwischen der Handverstellwelle und der sie lagernden Buchse angeordnet. Wenn durch die entsprechende Drehbewegung der Handverstellwelle die Arretiervorrichtung gelöst wird, kann sich der Rotor des Antriebsmotors bis zum Auslaufen bzw. bis zum Stillstand frei drehen. Dies ist bedingt durch einen Freilauf im Antriebszug. Dadurch werden auch stoßartige Belastungen und dergleichen vermieden. Man kann davon ausgehen, dass die Handverstellwelle zum Spannen der Rückstellfeder nicht nur von Hand gedreht wird, sondern auch mit einem Elektrowerkzeug. Damit die Rückstellfeder nicht überdreht bzw. beschädigt wird, ist vorgesehen, dass der Handverstellwelle eine Überlastsicherung funktionell zugeordnet ist. Diese Überlastsicherung ist so ausgelegt bzw. eingestellt, dass nur ein ganz bestimmtes Drehmoment übertragen werden kann. Die Überlastsicherung besteht zweckmäßigerweise aus zwei Kupplungsteilen, so dass ab einem bestimmten Drehmoment die Mitnahme eines Kupplungsteils nicht mehr möglich ist. Diese Überlastsicherung ist zweckmäßigerweise mit einer Federscheibe und einer gezahnten Scheibe ausgestattet, wobei die Federscheibe aus mehreren Schenkeln besteht, deren freie Enden abgewinkelt sind und diese abgewinkelten Enden in Ausnehmungen des Umfangs der Zahnscheibe eingreifen. Wenn die abgewinkelten Enden der Federstege die Zähne überspringen, wird dies hörbar, so dass dann normalerweise die Drehung der Handverstellwelle beendet wird.

Anhand der beiliegenden Zeichnungen wird die Erfindung noch näher erläutert. Es zeigen:
- Figur 1: den Antriebsmotor und die den Rotor haltende Arretiereinrichtung im Aufriss, und
- Figur 2: eine der Figur 1 entsprechende Darstellung, jedoch die Arretiereinrichtung in der Freigabestellung zeigend
- Figur 3: eine Möglichkeit einer Überlastsicherung zum Schutz gegenüber Spannung der Rückstellfeder.

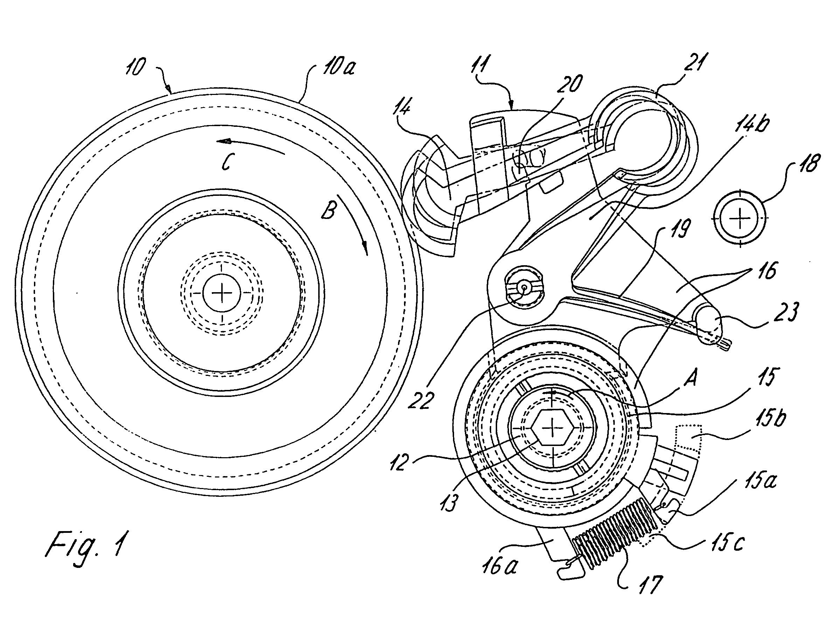

Der erfindungsgemäße elektromotorische Stelltrieb ist aus Gründen der vereinfachten Darstellung nicht vollständig dargestellt. Er beinhaltet einen Antriebsmotor 10, der mit einem äußeren Rotor 10a ausgestattet ist. Der Antriebsmotor 10 ist mit einem nicht dargestellten Befestigungsflansch ausgestattet, um ihn innerhalb des Getriebegehäuses festzulegen. Derartige Antriebsmotoren sind handelsüblich zu beziehen. Im Stillstand wird der Rotor 11a durch eine noch näher erläuterte Arretiereinrichtung gebremst, d.h. der Rotor wird im Stillstand gehalten. Der elektromotorische Stelltrieb ist außerdem mit einem Rückstellfederelement ausgestattet, welches durch Drehen einer Handverstellwelle 12 entgegen dem Uhrzeigersinn spannbar ist, wie durch den Pfeil A angedeutet. Die Handverstellwelle ist mit einem Sechskant 13 ausgestattet, der vorstehen kann oder auch ein Innensechskant sein kann, so dass die Handverstellwelle 12 mit einem geeigneten Werkzeug gedreht werden kann. Die Handverstellwelle 12 steht achsparallel zur Drehachse des Rotors 10a des Antriebsmotors 10. Ist der Antriebsmotor 10 stromlos und das Rückstellfederelement ungespannt, liegt ein noch näher erläuterter Bremshebel 14 der Arretiereinrichtung 11 am Rotor 10a an, es wird jedoch keine oder keine nennenswerte Anpresskraft erzeugt. Sobald jedoch durch Drehen der Handverstellwelle 12 das Rückstellfederelement gespannt wird, wird in noch näher erläuterter Weise der Bremshebel 14 mit einer Kraft gegen den Rotor 10a gedrückt. Beim Drehen der Handverstellwelle 13 entgegen dem Uhrzeigersinn steht der Rotor 10a nur deshalb still, weil in dem auf die Handverstellwelle 12 gelagerten Antriebsrad ein Freilauf montiert ist. Auf der Handverstellwelle 12 ist eine Buchse 15 reibschlüssig derart gelagert, dass sie beim Drehen der Handverstellwelle 12 entgegen dem Uhrzeigersinn durch die Reibkraft mitgenommen wird. An der Buchse 15 ist ein Ausleger 15a angesetzt oder angeformt, der bei der Drehbewegung gegen einen ortsfesten Anschlag 15b schlägt, so dass die Drehbewegung beendet ist. Auf der Buchse 15 ist ein Hebel 16 der Arretiereinrichtung 11 ebenfalls drehbar gelagert. Das die Buchse 15 umschließende Lagerelement des Hebels 16 ist mit einem Schlitz oder einer Ausnehmung für den Ausleger 15a versehen. Das Lagerelement des Hebels 16 ist ebenfalls mit einem Ausleger 16a ausgestattet, der im Winkelabstand zum Ausleger 15a der Buchse 15 steht. In die beiden Ausleger 15a und 16a sind die Enden einer Zugfeder 17 eingehängt. Wird die Buchse 15 durch die Drehbewegung der Handverstellwelle 12 mitgenommen, wird auch der Hebel 16 über die Zugfeder 17 mitgenommen. Demzufolge kommt der an dem Hebel 16 gelagerte Bremshebel 14 in Kontakt mit dem Rotor 10a des Antriebsmotors 10. Die Figur 1 zeigt die Stellungen, in der das Rückstellfederelement noch nicht gespannt ist. Der Ausleger 15a liegt in dieser Stellung an einem Anschlag 15c an. Sobald die Handverstellwelle 12 ein klein wenig in Richtung des Pfeiles A gedreht wird, schlägt der Ausleger 15a gegen den Anschlag 15b, wodurch die Drehbewegung der Buchse 15 und die Drehbewegung des Hebels 16 beendet sind. Zum weiteren Spannen kann die Handverstellwelle 12 jedoch noch weiter gedreht werden. Durch die unterschiedlichen Drehwinkel wird über die Zugfeder 17 eine Anpresskraft auf den Rotor 11 aufgebracht. Wird die Handverstellwelle 12 nicht mehr in Pfeilrichtung A gedreht, ist durch die Auslegung des Bremshebels 14 sichergestellt, dass die aufgebrachte Bremskraft ausreichend groß ist, um den Rotor 10a gegen Drehung zu sichern.

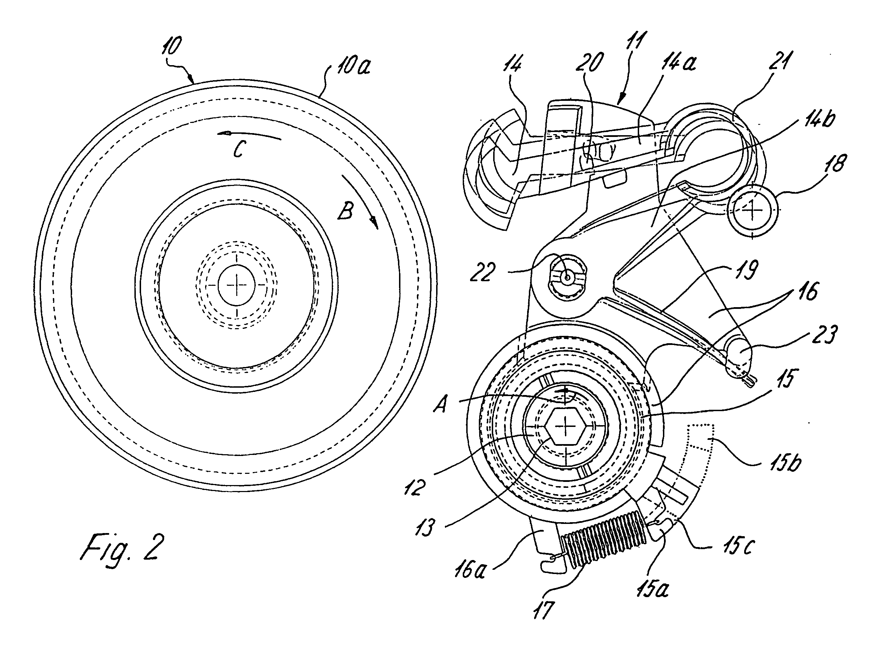

Zur Entriegelung der Arretiereinheit 11 gemäß der Darstellung nach der Figur 2 wird die Handverstellwelle 12 entgegen der Pfeilrichtung A, d.h. im Uhrzeigersinn gedreht. Mit dieser Drehung kann aufgehört werden, sobald der Bremshebel 14 außer Kontakt mit dem Rotor 10a des Antriebsmotors 10 kommt. Der Bremshebel 14 schlägt dann gegen einen ortsfesten Anschlag 18, und der Rotor wird dann durch das Rückstellfederelement in Pfeilrichtung B gedreht. Die Endstellungen des Abtriebsgliedes des Antriebszuges sind durch Anschläge begrenzt. Sobald das Abtriebsglied in der Endstellung ist, dreht sich auch die Handverstellwelle 12 nicht mehr. Durch einen Freilauf in der antriebstechnischen Verbindung zwischen der Handverstellwelle 12 und dem Antriebsmotor 10 kann der Rotor jedoch bis zum Stillstand ungebremst auslaufen. Beim Drehen der Handverstellwelle 12 entgegen dem Uhrzeigersinn, wird auch das Abtriebsglied des Antriebszuges geschwenkt. Durch die Drehbewegung der Handverstellwelle 12 entgegen dem Uhrzeigersinn wird demzufolge nicht nur das Rückstellfederelement gespannt, sondern auch das mit dem Abtriebsglied gekoppelte Stellglied, beispielsweise eine Klappe. Die die Grundstellung bildende Endstellung des Stellgliedes wird demzufolge durch Drehung der Handverstellwelle 12 erreicht. Um das Stellglied in die andere Endstellung im Bedarfsfalle zu verfahren, wird der Antriebsmotor 10 mit Strom beaufschlagt. Der Rotor 10a dreht sich dann in Pfeilrichtung C, d.h. entgegen dem Uhrzeigersinn und entgegen der Drehrichtung B, wenn der Rotor 10a durch die Rückstellfedereinheit angetrieben wird. Der Bremshebel 14 kommt außer Kontakt mit der Außenfläche des Rotors 10a. Dazu ist im dargestellten Ausführungsbeispiel an dem Bremshebel 14 an der dem Lagerelement des Hebels 16 zugeordneten Seite ein Federstab 19 angesetzt, der gespannt ist, wenn der Bremshebel 14 Kontakt mit dem Rotor 10a hat. Sobald durch die Drehung des Rotors 10a in Richtung C dieser Kontakt nicht mehr besteht, entspannt sich der Federstab 19, so dass der Bremshebel 14 gegen den ortsfesten Anschlag 18 schlägt. Anstelle des Federstabes 19 könnte auch die Schwenkbewegung des Bremshebels 14 durch eine daran angelenkte Zugfeder erfolgen. Der Antriebsmotor 10 wird so lange bestromt, bis das Stellglied in der von der Grundstellung abweichenden Endstellungen verfahren ist. Wird der Antriebsmotor 10 stromlos, wird der Bremshebel 14 wieder mit dem Rotor 10a in Kontakt gebracht. Wenn der Rotor 10a entgegen dem Uhrzeigersinn in Pfeilrichtung C sich dreht, dreht sich auch die Handverstellwelle 12 in der gleichen Richtung.

Das Zurücksetzen des Stellgliedes kann sowohl durch die Rückstellfedereinheit als auch von Hand durchgeführt werden. Beim Zurücksetzen durch die Rückstellfedereinheit wird die Handverstellwelle entgegen der Pfeilrichtung A, d.h. im Uhrzeigersinn gedreht. Dadurch wird die Arretiereinheit 11 ebenfalls im Uhrzeigersinn geschwenkt, so dass der Bremshebel 14 gegen den Anschlag 18 stößt, so dass der Rotor 10a in Pfeilrichtung B, d.h. im Uhrzeigersinn sich frei drehen kann. Am Bremshebel ist jedoch auch noch ein Nocken 20 angeformt und der Bremshebel 14 kann um eine Achse 22 im Uhrzeigersinn geschwenkt werden, wobei durch ein Ringfederelement 21 des Bremshebels 14 der Rastnocken 20 wieder in die ursprüngliche Position gedrückt wird, so dass der Federstab 19 in Form einer Rückholfeder wieder gespannt wird. Der Bremshebel 14 wird demzufolge gegenüber dem Hebel 16 relativ bewegt. Dem Federstab 19 ist noch ein Anschlag 23 zugeordnet, der am Hebel 16 im Bereich des freien Endes des Federstabes angeordnet ist.

Der Bremshebel 14 besteht aus zwei Schenkeln 14a und 14b, die einen spitzen Winkel einschließen und über das Ringfederelement 21 miteinander verbunden sind. Der dem Rotor 10a zugeordnete Schenkel 14a wird in einer Tasche des Hebels 16 geführt, die durch Abwinkelung gebildet ist. Die verlängerte Mittellängsachse des Schenkels 14a schneidet die Drehachse des Rotors 10 oder sie verläuft in einem geringfügigen Abstand dazu.

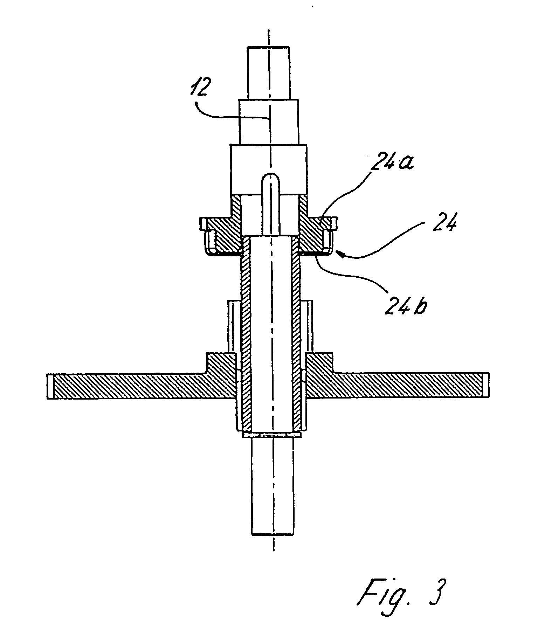

Die Figur 3 zeigt eine Möglichkeit einer Überlastsicherung 24 zum Schutz der Rückstellfeder gegen ein Überdrehen. Die Überlastsicherung 24 besteht aus einer Zahnscheibe 24a und einer Federscheibe 24b, die mehrere sternförmig angeordnete Schenkel aufweist, deren freie Enden abgewinkelt sind und diese abgewinkelten Enden in die Zahnlücken eingreifen. Dadurch ist es nur möglich, dass durch Drehung der Handverstellwelle 12 ein bestimmtes Drehmoment auf die nicht dargestellte Rückstellfeder übertragen wird. Wird dieses Drehmoment überschritten, werden die abgewinkelten Enden verformt und überspringen die Zähne. Die Überlastsicherung 24 kann jedoch auch anders gestaltet sein, beispielsweise durch zwei Scheiben, die an den einander zugewandten Seiten verzahnt sind und dass mindestens eine Scheibe federbelastet ist, so dass auch beim Überschreiten eines Drehmomentes eine Scheibe gegenüber der anderen eine Relativbewegung durchführt. Zweckmäßigerweise sollte die Überlastsicherung jedoch so gestaltet sein, dass eine die Handverstellwelle 12 drehende Person die Geräusche wahrnimmt, so dass die Drehung beendet wird. Der erfindungsgemäße elektromotorische Stelltrieb kann auch als Kleinst- oder Kompaktantrieb bezeichnet werden.

Die Erfindung ist nicht auf das dargestellte Ausführungsbeispiel beschränkt. Wesentlich ist, dass beim Spannen der Rückstellfedereinheit der Rotor 10a gebremst wird, so dass beispielsweise beim kurzzeitigen Unterbrechen der Drehbewegung dieser nicht zurückläuft. Ferner ist bedeutungsvoll, dass durch eine kurzzeitige Drehbewegung in der entgegengesetzten Richtung das Rückstellfederelement den Rotor 10a antreibt. Da der erfindungsgemäße elektromotorische Stelltrieb unter anderem auch für im Brandfall zu verstellende Stellglieder verwendet wird, sind die Funktionsteile aus Metall, beispielsweise aus Stahl oder einem Buntmetall gefertigt, so dass sie auch bei einer relativ hohen Erwärmung noch funktionsfähig sind.

## Patentansprüche

1. Elektromotorischer Stelltrieb, insbesondere für schwenkbare Stellglieder, mit einem Antriebsmotor und mit einem mit einem Abtriebsglied ausgestatteten Antriebszug sowie einer Arretiervorrichtung **dadurch gekennzeichnet, dass** der Antriebsmotor (10) mit einem äußeren Rotor (10a) ausgestattet ist, und dass dem Rotor (10a) ein spannbares Rückstellfederelement zugeordnet ist, und dass die Arretiervorrichtung (11) mit einem bei Stillstand des Rotors (10a) daran anliegendem Bremsglied (14) ausgestattet ist, welches beim Spannen der Rückstellfeder den Rotor (10a) des Antriebsmotors (10) im Stillstand hält, und dass zumindest das Bremsglied (14) der Arretiervorrichtung (11) beim Anlauf des Rotors in eine Freigabestellung bringbar ist, und dass zur Grundeinstellung des Stellgliedes der Stelltrieb mit einer Handverstellwelle (12) ausgestattet ist.

2. Elektromotorischer Stelltrieb nach Anspruch 1, **dadurch gekennzeichnet, dass** auf die Handverstellwelle (12) wenigstens ein Rad des Antriebszuges gelagert ist, und dass die Rückstellfeder durch Drehung der Handverstellwelle (12) im Stillstand des Rotors (10a) des Antriebsmotors (10) spannbar ist.

3. Elektromotorischer Stelltrieb nach Anspruch 2, **dadurch gekennzeichnet, dass** das Rad mittels eines Freilaufes oder einer Überholkupplung auf der Handverstellwelle (12) gelagert ist.

4. Elektromotorischer Stelltrieb nach Anspruch 2 oder 3, **dadurch gekennzeichnet, dass** die Handverstellwelle (12) achsparallel zur Drehachse des Rotors (10a) des Antriebsmotors (10) angeordnet ist.

5. Elektromotorischer Stelltrieb nach einem oder mehreren der vorhergehenden Ansprüche 1 bis 4, **dadurch gekennzeichnet, dass** die Handverstellwelle (12) in einer Buchse (15) derart reibschlüssig gelagert ist, dass beim Verdrehen der Handverstellwelle (12) eine Mitnahme der Buchse (15) erfolgt, und dass der Drehwinkel der Buchse (15) in beiden Drehrichtungen durch Anschläge (15b, 15c) begrenzt ist.

6. Elektromotorischer Stelltrieb nach Anspruch 5, **dadurch gekennzeichnet, dass** auf der Buchse (15) ein Hebel (16) gelagert ist, an dem eine Zugfeder (17) angelenkt ist, die mit dem anderen Ende an der Buchse (15) angelenkt ist.

7. Elektromotorischer Stelltrieb nach einem oder mehreren der vorhergehenden Ansprüche 1 bis 6, **dadurch gekennzeichnet, dass** der Drehwinkel der reibschlüssig mitgenommenen Buchse (15) größer ist als der Drehwinkel des Hebels (16), und dass durch die Differenz der Drehwinkel über die Zugfeder (15) der Bremshebel (14) eine Anpresskraft auf den Rotor (10a) des Antriebsmotors (10) überträgt.

8. Elektromotorischer Stelltrieb nach einem oder mehreren der vorhergehenden Ansprüche 1 bis 7, **dadurch gekennzeichnet, dass** die Arretiervorrichtung (11) im wesentlichen aus dem Bremshebel (14) und dem auf der Buchse (15) gelagerten Hebel (16) gebildet ist, und dass der Bremshebel (14) gegenüber dem Hebel (16) verdrehbar ist.

9. Elektromotorischer Stelltrieb nach einem oder mehreren der vorhergehenden Ansprüche 1 bis 8, **dadurch gekennzeichnet, dass** der Bremshebel (14) der Arretiereinrichtung (11) aus zwei im Winkel zueinander stehenden Schenkeln (14a, 14b) gebildet ist, und dass der von den Schenkeln (14a, 14b) eingeschlossene Winkel vorzugsweise ein spitzer Winkel ist.

10. Elektromotorischer Stelltrieb nach Anspruch 9, **dadurch gekennzeichnet, dass** die beiden Schenkel (14a, 14b) des Bremshebels (14) durch ein Federelement (21), vorzugsweise durch ein ringartiges Federelement miteinander verbunden sind.

11. Elektromotorischer Stelltrieb nach einem oder mehreren der vorhergehenden Ansprüche 1 bis 10, **dadurch gekennzeichnet, dass** an dem Bremshebel (14) ein elastischer Ausleger derart angeformt ist, oder dass daran eine Zugfeder angreift, so dass beim Anlauf des Antriebsmotors (10) der Bremshebel (14) der Arretiervorrichtung (11) in eine durch einen Anschlag (18) begrenzte Freigabestellung schwenkbar ist.

12. Elektromotorischer Stelltrieb nach einem oder mehreren der vorhergehenden Ansprüche 1 bis 11, **dadurch gekennzeichnet, dass** zum Verschwenken des Bremshebels (14) in eine Freigabestellung von Hand dieser mit einem Rastnocken (20) ausgestattet ist.

13. Elektromotorischer Stelltrieb nach einem oder mehreren der vorhergehenden Ansprüche 1 bis 12, **dadurch gekennzeichnet, dass** die Handverstellwelle (12) mit einem Federelement, vorzugsweise einer Schlingfeder derart ausgestattet ist, dass bei Drehung entgegen der Drehrichtung zum Spannen der Rückstellfeder die Arretiervorrichtung (11) lösbar ist.

14. Elektromotorischer Stelltrieb nach Anspruch 13, **dadurch gekennzeichnet, dass** das Federelement in einem Spalt zwischen der Handverstellwelle (12) und der sie lagernden Buchse (15) angeordnet ist.

15. Elektromotorischer Stelltrieb nach einem oder mehreren der vorhergehenden Ansprüche 1 bis 14, **dadurch gekennzeichnet, dass** zum Schutz der Rückstellfeder gegen Überdrehen der Handverstellwelle (12) eine Überlastsicherung (24) funktionell zugeordnet ist.

16. Elektromotorischer Stelltrieb nach Anspruch 15, **dadurch gekennzeichnet, dass** die Überlastsicherung (24) aus einer Zahnscheibe (24a) und einer Federscheibe (24b) gebildet ist, dass die Federscheibe 24b mehrere radial sich erstreckende Federstege aufweist, deren Enden abgewinkelt sind und in die Zahnlücken eingreifen.

17. Elektromotorischer Stelltrieb nach Anspruch 15, **dadurch gekennzeichnet, dass** die Überlastsicherung (24) aus zwei sich kontaktierenden Scheiben gebildet ist, dass die einander zugewandten Flächen profiliert sind, und dass wenigstens eine Scheibe federbelastet ist.

## Claims

1. Electric motor actuator, in particular for pivotable actuating elements, having a drive motor and a drive train equipped with an output drive element and a locking device, **characterized in that** the drive motor (10) is equipped with an outer rotor (10a), and **in that** the rotor (10a) is assigned a restoring spring element that can be stressed, and **in that** the locking device (11) is equipped with a braking element (14) which bears on the rotor (10a) when the latter is at a standstill and which, when the restoring spring is stressed, keeps the rotor (10a) of the drive motor (10) at a standstill, and **in that** at least the braking element (14) of the locking device (11) can be brought into a release position as the rotor is set moving, and **in that** the actuator is provided with a manual adjustment shaft (12) for the basic setting of the actuating element.

2. Electric motor actuator according to Claim 1, **characterized in that** at least one wheel of the drive train is mounted on the manual adjustment shaft (12), and **in that** the restoring spring can be stressed by rotating the manual adjustment shaft (12) when the rotor (10a) of the drive motor (10) is at a standstill.

3. Electric motor actuator according to Claim 2, **characterized in that** the wheel is mounted on the manual adjustment shaft (12) by means of a freewheel or a freewheel clutch.

4. Electric motor actuator according to Claim 2 or 3, **characterized in that** the manual adjustment shaft (12) is arranged axially parallel with the axis of rotation of the rotor (10a) of the drive motor (10).

5. Electric motor actuator according to one or more of the preceding Claims 1 to 4, **characterized in that** the manual adjustment shaft (12) is mounted with a friction fit in a bush (15) such that, when the manual adjustment shaft (12) is rotated, the bush (15) is carried along with it, and **in that** the rotational angle of the bush (15) in both directions of rotation is limited by stops (15b, 15c).

6. Electric motor actuator according to Claim 5, **characterized in that** on the bush (15) there is mounted a lever (16) to which there is attached a tension spring (17) which at the other end is attached to the bush (15).

7. Electric motor actuator according to one or more of the preceding Claims 1 to 6, **characterized in that** the rotational angle of the bush (15) that is carried along with a friction fit is greater than the rotational angle of the lever (16), and **in that**, as a result of the difference in the rotational angles, the brake lever (14) transmits a pressing force via the tension spring (17) onto the rotor (10a) of the drive motor (10).

8. Electric drive actuator according to one or more of the preceding Claims 1 to 7, **characterized in that** the locking device (11) is formed substantially by the brake lever (14) and the lever (16) mounted on the bush (15), and **in that** the brake lever (14) can be rotated with respect to the lever (16).

9. Electric motor actuator according to one or more of the preceding Claims 1 to 8, **characterized in that** the brake lever (14) of the locking device (11) is formed of two limbs (14a, 14b) at an angle to each other, and that the angle formed by the limbs (14a, 14b) is preferably an acute angle.

10. Electric motor actuator according to Claim 9, **characterized in that** the two limbs (14a, 14b) of the brake lever (14) are connected to each other by a spring element (21), preferably by a ring-like spring element.

11. Electric motor actuator according to one or more of the preceding Claims 1 to 10, **characterized in that** a resilient outrigger is integrally moulded on the brake lever (14) in such a way, or **in that** a tension spring acts thereon in such a way, that, when the drive motor (10) is set moving, the brake lever (14) of the locking device (11) can be pivoted into a release position limited by a stop (18).

12. Electric motor actuator according to one or more of the preceding Claims 1 to 11, **characterized in that**, in order to pivot the brake lever (14) into a release position by hand, it is equipped with a latching cam (20).

13. Electric motor actuator according to one or more of the preceding Claims 1 to 12, **characterized in that** the manual adjustment shaft (12) is equipped with a spring element, preferably a loop spring, in such a way that, in the event of rotation counter to the direction of rotation for stressing the restoring spring, the locking device (11) can be released.

14. Electric motor actuator according to Claim 13, **characterized in that** the spring element is arranged in a gap between the manual adjustment shaft (12) and the bush (15) which mounts the latter.

15. Electric motor actuator according to one or more of the preceding Claims 1 to 14, **characterized in that**, in order to protect the restoring spring against over-rotation, an overload safeguard (24) is functionally assigned to the manual adjustment shaft (12).

16. Electric motor actuator according to Claim 15, **characterized in that** the overload safeguard (24) is formed by a toothed disc (24a) and a spring disc (24b), and **in that** the spring disc (24b) has a plurality of spring webs which extend radially and whose ends are angled over and engage in the gaps in the teeth.

17. Electric motor actuator according to Claim 15, **characterized in that** the overload safeguard (24) is formed by two discs which contact each other, **in that** the surfaces facing each other are profiled, and **in that** at least one disc is springloaded.

## Revendications

1. Mécanisme de réglage à moteur électrique, en particulier pour organes de réglage pivotants, comportant un moteur d'entraînement et une chaîne d'entraînement équipée d'un organe mené, ainsi qu'un dispositif d'arrêt, **caractérisé en ce que** le moteur d'entraînement (10) est équipé d'un rotor extérieur (10a), et **en ce qu'**au rotor (10a) est associé un élément formant ressort de rappel pouvant être tendu, et **en ce que** le dispositif d'arrêt (11) est équipé d'un organe de freinage (14) s'appliquant contre celui-ci à l'arrêt du rotor (10a) et qui maintient à l'arrêt le rotor (10a) du moteur d'entraînement (10) lorsque le ressort de rappel est tendu, et **en ce qu'**au moins l'organe de freinage (14) du dispositif d'arrêt (11) peut être amené dans une position de libération au démarrage du rotor, et **en ce que** pour le réglage de base de l'organe de réglage le mécanisme de réglage est équipé d'un arbre de réglage manuel (12).

2. Mécanisme de réglage à moteur électrique selon la revendication 1, **caractérisé en ce que** sur l'arbre de réglage manuel (12) est montée au moins une roue de la chaîne d'entraînement, et **en ce que** le ressort de rappel peut être tendu par rotation de l'arbre de réglage manuel (12) à l'arrêt du rotor (10a) du moteur d'entraînement (10).

3. Mécanisme de réglage à moteur électrique selon la revendication 2, **caractérisé en ce que** la roue est montée sur l'arbre de réglage manuel (12) au moyen d'une roue libre ou d'un embrayage à roue libre.

4. Mécanisme de réglage à moteur électrique selon la revendication 2 ou 3, **caractérisé en ce que** l'arbre de réglage manuel (12) est disposé avec son axe parallèle à l'axe de rotation du rotor (10a) du moteur d'entraînement (10).

5. Mécanisme de réglage à moteur électrique selon une ou plusieurs des revendications 1 à 4 précédentes, **caractérisé en ce que** l'arbre de réglage manuel (12) est monté avec liaison par friction dans une douille (15) de manière que lors de la rotation de l'arbre de réglage manuel (12) il se produise un entraînement de la douille (15), et **en ce que** l'angle de rotation de la douille (15) est limité dans les deux sens de rotation par des butées (15b, 15c).

6. Mécanisme de réglage à moteur électrique selon la revendication 5, **caractérisé en ce que** sur la douille (15) est monté un levier (16) auquel est articulé un ressort de traction (17) qui est articulé par l'autre extrémité à la douille (15).

7. Mécanisme de réglage à moteur électrique selon une ou plusieurs des revendications 1 à 6 précédentes, **caractérisé en ce que** l'angle de rotation de la douille (15) entraînée par friction est supérieur à l'angle de rotation du levier (16), et **en ce que** par la différence des angles de rotation, par l'intermédiaire du ressort de traction (15), le levier de freinage (14) transmet une force de pression au rotor (10a) du moteur d'entraînement (10).

8. Mécanisme de réglage à moteur électrique selon une ou plusieurs des revendications 1 à 7 précédentes, **caractérisé en ce que** le dispositif d'arrêt (11) est formé pour l'essentiel du levier de freinage (14) et du levier (16) monté sur la douille (15), et **en ce que** le levier de freinage (14) peut tourner par rapport au levier (16).

9. Mécanisme de réglage à moteur électrique selon une ou plusieurs des revendications 1 à 8 précédentes, **caractérisé en ce que** le levier de freinage (14) du dispositif d'arrêt (11) est formé de deux branches (14a, 14b) disposées en angle l'une par rapport à l'autre, et **en ce que** l'angle formé par les branches (14a, 14b) est de préférence un angle aigu.

10. Mécanisme de réglage à moteur électrique selon la revendication 9, **caractérisé en ce que** les deux branches (14a, 14b) du levier de freinage (14) sont reliées entre elles par un élément formant ressort (21), de préférence par un élément formant ressort de type anneau.

11. Mécanisme de réglage à moteur électrique selon une ou plusieurs des revendications 1 à 10 précédentes, **caractérisé en ce que** sur le levier de freinage (14) est formé un bras en porte-à-faux élastique, ou **en ce que** sur celui-ci agit un ressort de traction de manière qu'au démarrage du moteur d'entraînement (10), le frein de levage (14) du dispositif d'arrêt (11) puisse pivoter dans une position de libération limitée par une butée (18).

12. Mécanisme de réglage à moteur électrique selon une ou plusieurs des revendications 1 à 11 précédentes, **caractérisé en ce que** pour le pivotement à la main du levier de freinage (14) dans une position de libération, celui-ci est équipé d'une came d'encliquetage (20).

13. Mécanisme de réglage à moteur électrique selon une ou plusieurs des revendications 1 à 12 précédentes, **caractérisé en ce que** l'arbre de réglage manuel (12) est équipé d'un élément formant ressort, de préférence d'un ressort enroulé, de manière que dans le cas d'une rotation dans le sens contraire au sens de tension du ressort de rappel, le dispositif d'arrêt (11) puisse être déverrouillé.

14. Mécanisme de réglage à moteur électrique selon la revendication 13, **caractérisé en ce que** l'élément formant ressort est disposé dans une fente entre l'arbre de réglage manuel (12) et la douille (15) le supportant.

15. Mécanisme de réglage à moteur électrique selon une ou plusieurs des revendications 1 à 14 précédentes, **caractérisé en ce que** pour protéger le ressort de rappel contre une surtension, une protection contre les surcharges (24) est associée de manière fonctionnelle à l'arbre de réglage manuel (12).

16. Mécanisme de réglage à moteur électrique selon la revendication 15, **caractérisé en ce que** la protection contre les surcharges (24) est constituée d'un disque denté (24a) et d'une rondelle-ressort (24b), **en ce que** la rondelle-ressort (24b) comporte plusieurs barrettes élastiques s'étendant radialement dont les extrémités sont coudées et s'engagent dans les entre-dents.

17. Mécanisme de réglage à moteur électrique selon la revendication 15, **caractérisé en ce que** la protection contre les surcharges (24) est constituée de deux disques en contact l'un avec l'autre, **en ce que** les surfaces tournées l'une vers l'autre sont profilées, et **en ce qu'**au moins un disque est soumis à un ressort.
